# FASCICULE DE BREVET EUROPEEN

(11) **EP 0 493 213 B1**
(45) Date de publication et mention de la délivrance du brevet: **11.01.1995**
(21) Numéro de dépôt: 91403463.2
(22) Date de dépôt: 19.12.1991
(51) Int. Cl.: G01B 11/10

(54) **Dispositif de détection des irrégularités du diamétre d'un fil**
Vorrichtung zur Detektion von Unregelmässigkeiten des Durchmessers eines Fadens
Apparatus for detecting the irregularities of the diameter of a thread

(30) Priorité: 21.12.1990 FR 9016112
(43) Date de publication de la demande: 01.07.1992
(73) Titulaire: ALCATEL FIBRES OPTIQUES, F-95871 Bezons Cedex (FR)
(72) Inventeur: Sullerot, David, F-75014 Paris (FR); Faure, Michel, F-75017 Paris (FR); Floch, Bernard, F-60240 Chaumont en Vexin (FR); Lumineau, Yves, F-95610 Eragny-sur-Oise (FR)
(74) Mandataire: Weinmiller, Jürgen

(56) Documents cités:
- EP-A- 0 294 889
- DE-B- 1 075 323
- FR-A- 2 383 138

## Description

La présente invention a pour objet un dispositif de détection des irrégularités de diamètre sur des fils, et en particulier sur les fibres optiques gainées.

Par exemple, lors de la fabrication de fibres optiques gainées, l'opération de fibrage est suivie d'une opération d'enduction de la fibre optique obtenue, afin de la doter d'une gaine protectrice. On obtient ainsi une fibre optique gainée, que l'on désignera dans la suite plus simplement par "fibre optique". Durant l'opération d'enduction, il est nécessaire de contrôler très précisément le diamètre d'enduction, car toute variation de ce dernier entraîne une variation du diamètre de la fibre optique en cours de fabrication, variation pouvant dépasser les limites de tolérance en précision. Tout défaut non détectable en production risque de gêner, par la suite, le passage des fibres dans des filières.

Pour cela, on utilise un système optique du commerce dont la bande passante est faible (de l'ordre de 10 à 500 Hz), c'est-à-dire qu'il n'est pas possible de détecter un défaut d'enduction de longueur 0,5 mm et d'épaisseur quelques microns à une vitesse de fibrage classique allant de 200 m/min à 500 m/min. Or, dans le domaine des fibres optiques, la tolérance en ce qui concerne l'épaisseur des défauts d'enduction est de plus ou moins 15 µm (ce qui correspond à une bande passante de 7 kHz). Ce système n'est donc pas utilisable pour détecter les variations de diamètre d'enduction de fibres optiques.

Pour atteindre des bandes passantes de 7 kHz, on a alors recours à des appareils utilisant le principe d'ombroscopie, qui permettraient théoriquement de détecter des défauts d'enduction pour des vitesses de fibrage allant jusqu'à 600 m/min et plus (bandes passantes supérieures à 20 kHz).

On connaît par ailleurs la demande de brevet EP-0 294 889, qui décrit en relation avec sa figure 4 un dispositif pour mesurer le diamètre d'un objet dans deux directions orthogonales : on éclaire à l'aide d'une source lumineuse placée au foyer d'un objectif une fibre à contrôler par exemple; la fibre est orthogonale à l'axe optique du dispositif. Entre l'objectif et la fibre sont disposés une fente diaphragmante puis un système optique en sortie duquel le faisceau de lumière éclairant la fibre est un faisceau de lumière parallèle. Ce faisceau est dédoublé pour obtenir deux faisceaux de directions orthogonales entre elles. On obtient ainsi au niveau de deux détecteurs l'image d'un plan médian passant par l'axe longitudinal de la fibre. Ceci permet de déterminer le diamètre de cette fibre.

Dans un tel dispositif, le traitement qui doit être effectué au niveau des détecteurs est lent, de sorte l'on ne peut atteindre les bandes passantes souhaitées.

Le but de la présente invention est de mettre au point un dispositif de détection des irrégularités du diamètre de fils, et en particulier de fibres optiques permettant de détecter par exemple pour des fibres optiques, des défauts d'enduction dont les dimensions respectent les limites de tolérance de plus ou moins 15 µm pour l'épaisseur, et 0,5 mm pour la longueur, avec des vitesses de défilement correspondant à celles utilisées classiquement dans le fibrage et ayant une bande passante importante.

La présente invention a pour objet un dispositif de détection des irrégularités du diamètre d'un fil comprenant une source lumineuse de petites dimensions placée au foyer d'un objectif centré sur un axe optique orthogonal audit fil, une fente de direction orthogonale audit axe optique et diaphragmant ledit objectif, un premier système optique centré sur ledit axe optique, suivi d'un système optique de dédoublement du faisceau incident placé avant ledit fil, et des moyens de détection comprenant deux détecteurs recevant chacun un faisceau intercepté par ledit fil, caractérisé en ce que :
- ladite fente a une direction orthogonale audit fil,
- ledit système optique de dédoublement est destiné à former, en combinaison avec ledit premier système optique, deux images nettes de ladite fente dans un plan orthogonal audit axe optique et où défile ledit fil,
- lesdits détecteurs sont destinés à détecter les deux faisceaux interceptés par ledit fil dans la direction de l'axe optique, fournissent chacun un signal intermédiaire, et sont montés en opposition de manière à délivrer un signal final fonction de la différence entre l'un et l'autre desdits signaux intermédiaires.

Selon une caractéristique importante, les détecteurs sont situés respectivement sur deux images nettes et séparées de la source.

Selon d'autres caractéristiques de ce dispositif, la source lumineuse peut être choisie monochromatique. On peut par exemple utiliser une diode électro-luminescente dont la largeur spectrale est inférieure à 100 nm.

Afin d'améliorer le rapport signal à bruit, il est possible de moduler la source lumineuse en amplitude à une fréquence supérieure à la fréquence maximum du signal à détecter.

En ce qui concerne le système optique de dédoublement, il sera choisi de manière à dédoubler la totalité du faisceau incident sans introduire de différence de marche entre les deux faisceaux obtenus. On pourra par exemple choisir un prisme de Wollaston ou un prisme de Rochon.

Dans le cas de l'utilisation d'un système optique de dédoublement agissant par séparation de polarisations du faisceau émis par la source (prisme de Wollaston ou de Rochon), on peut disposer sur le trajet du faisceau lumineux, entre la source et le système optique de dédoublement, un polariseur dont l'orientation de l'axe de polarisation permet d'équilibrer l'intensité lumineuse des deux images de la source.

En outre, les images nettes de la fente auront pour hauteur la longueur minimale d'un défaut à détecter. Leur longueur sera au moins supérieure à deux fois l'amplitude des déplacements latéraux du fil dans le plan orthogonal à l'axe optique. Une longueur de 2 mm est acceptable. La valeur de l'écartement entre les deux images nettes de la fente sera comprise de manière avantageuse, entre une fois et dix fois la valeur de la hauteur de ces images.

Par ailleurs, on peut placer les détecteurs respectivement sur deux images nettes de la fente.

Afin de séparer les deux images nettes de la source, on peut disposer, avant les détecteurs, un prisme déviateur permettant d'éviter le recouvrement des deux images de la source et de diriger ces images respectivement sur le détecteur correspondant.

Enfin, on peut placer la fente au foyer image de l'objectif, de manière à améliorer l'homogénéité de l'éclairement.

Des caractéristiques et avantages de la présente invention apparaîtront lors de la description suivante d'un mode de réalisation préférentiel du dispositif selon l'invention, donnée à titre illustratif mais nullement limitatif.

La figure 1 illustre schématiquement un dispositif selon l'invention ainsi que le trajet d'un faisceau de lumière issu de la source.

La figure 2 illustre un autre dispositif selon l'invention.

La figure 3 est une vue dans le plan d'une fibre à contrôler.

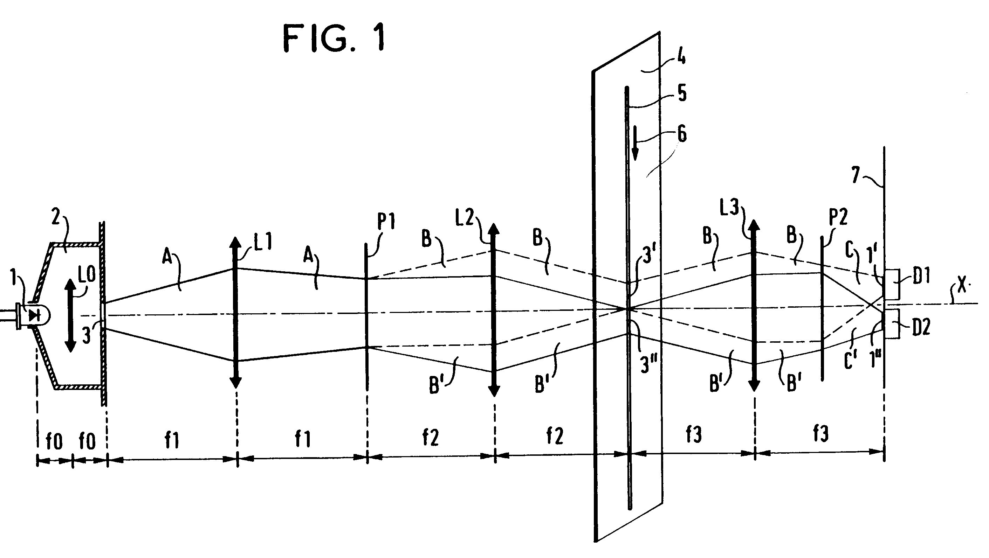

Dans la figure 1, une source lumineuse de petites dimensions 1 est placée au foyer objet d'un objectif 2 constitué schématiquement d'une lentille Lo centrée sur un axe optique X; une fente horizontale 3, orthogonale à l'axe X, est placée au foyer image de l'objectif 2. On choisira de préférence une source 1 monochromatique, afin d'obtenir des images nettes sans aberration chromatique. On pourra par exemple choisir une diode électro-luminescente (DEL) avec une largeur spectrale inférieure à 100 nm.

L'homogénéité de l'éclairement n'est pas nécessaire. Toutefois la position de la fente 3 au foyer image de l'objectif 2 est telle que l'éclairement au niveau de cette fente soit rendu plus homogène (champ lointain) que l'éclairement au niveau de la source (champ proche).

Un faisceau de lumière A issu de la source 1 et passant par la fente 3 arrive sur une lentille L1 de focale f1 dont le foyer objet se situe sur l'axe X au niveau de la fente 3 et au foyer image de laquelle est placé un prisme de Wollaston P1 permettant de dédoubler le faisceau incident A, par séparation de polarisations, en deux faisceaux B (en trait interrompu) et B′ (en trait continu) de polarisations orthogonales entre elles. On forme ensuite au moyen d'une lentille L2 de focale f2 et dont le foyer objet est confondu avec le foyer image de L1 en P1, deux images nettes 3′ et 3˝ de la fente 3 dans un plan 4. Ces images sont horizontales et parallèles entre elles.

La fibre à contrôler 5 défile dans le plan 4 verticalement et perpendiculairement à l'axe optique X et aux deux images 3′ et 3˝, dans le sens de la flèche 6. Il n'est pas gênant que la fibre 5 ne se trouve pas rigoureusement dans le plan 4, mais défile dans un plan très voisin, parallèle au plan 4, car les images 3′ et 3˝ de la fente 3 sont nettes dans une plage importante.

La hauteur h des images 3′ et 3˝ de la fente 3 est choisie pour être adaptée à la longueur minimale des défauts que l'on souhaite détecter. On peut par exemple choisir h sensiblement égale à 0,3 mm.

La longueur L des images 3′ et 3˝ de la fente 3 doit être compatible avec d'éventuels déplacements latéraux de la fibre à contrôler. On peut par exemple choisir L égale à 2 mm.

On forme ensuite au moyen d'une lentille L3 de focale f3, dont le foyer objet est confondu sur l'axe X avec le foyer image de la lentille L2 dans le plan 4, et d'un prisme de Wollaston P2 deux images nettes et séparées 1′ et 1˝ de la source 1, respectivement sur deux détecteurs D1 et D2 montés en opposition dans un plan 7 placé au foyer image de L3. De cette manière, après le passage à travers la lentille L3, les faisceaux B et B′ sont déviés par le prisme P2 et les faisceaux C (en trait interrompu) et C′ (en trait continu) ainsi obtenus sont reçus chacun respectivement par les deux détecteurs D1 et D2. On obtient après traitement des signaux en sortie des détecteurs, deux tensions V1 et V2. Ces tensions sont proportionnelles à la quantité de lumière reçue par chaque détecteur. Puisque les détecteurs D1 et D2 sont montés en opposition, le signal final est fonction de la différence V1-V2 (ou V2-V1). Dès qu'il y a un défaut d'enduction, ce signal final n'est plus nul, et le défaut est immédiatement détecté.

Les résultats obtenus grâce au dispositif selon l'invention ne sont pas critiques vis-à-vis de l'homogénéité de la lumière reçue ; en effet, ce paramètre est éliminé puisque le signal final correspond à la différence entre les deux signaux obtenus. De même, les résultats ne sont pas critiques vis-à-vis de la position des images de la source sur la surface des détecteurs, même si la réponse de ces derniers dépend de cette position. En effet, les images formées sur les détecteurs étant des images de la source, elles restent invariantes même si la fibre se déplace dans la zone de mesure.

Ainsi, le dispositif de l'invention permet de détecter des défauts d'enduction respectant les limites de tolérance pour une fibre optique, qui sont de plus ou moins 15 µm pour l'épaisseur et 0,5 mm pour la longueur.

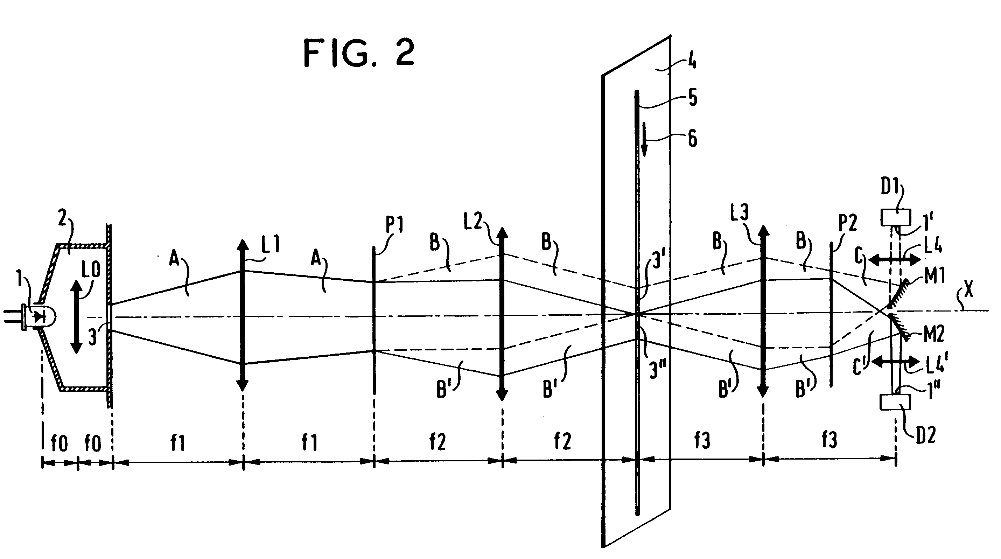

Selon une variante de réalisation illustrée dans la figure 2, on dispose, après la lentille L3 et sur le trajet des faisceaux lumineux C et C' deux miroirs M1 et M2 recevant chacun respectivement un faisceau C et C'. Chaque faisceau C et C', après passage respectivement à travers deux lentilles identiques L4 et L4', est ensuite envoyé sur les détecteurs respectifs D1 et D2. Les images de la source 1 et 1' sont toujours formées sur les détecteurs D1 et D2 montés en opposition comme dans le dispositif décrit à la figure 1. Le dispositif réalisé selon cette variante conduit à des résultats et à des précisions identiques à ceux obtenus grâce au dispositif décrit à la figure 1.

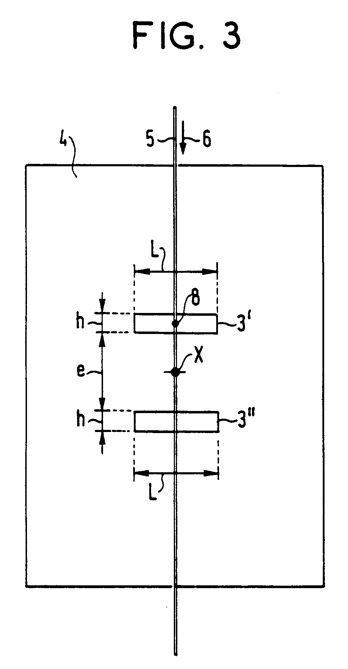

Selon un perfectionnement apparaissant dans la figure 3, l'écartement e entre les images 3' et 3'', déterminé par le prisme P1 et la focale f2 de la lentille L2, est choisi de préférence compris entre h et 10h. Un tel écartement permet de s'affranchir d'éventuels défauts périodiques dont la période spatiale serait égale à l'écartement entre les images 3' et 3''. On a également représenté dans cette figure un défaut d'enduction 8.

Bien entendu, l'invention n'est pas limitée au mode de réalisation préférentiel qui vient d'être décrit.

Toute source de lumière de petites dimensions peut être utilisée dans le cadre du procédé selon l'invention.

Par ailleurs, lorsqu'on utilise un système de dédoublement par séparation de polarisations, on peut disposer entre la source et le système optique de dédoublement, un polariseur dont l'orientation de l'axe de polarisation permet d'équilibrer l'intensité lumineuse des deux images de la source.

On pourra en outre moduler l'intensité de la lumière émise afin d'améliorer le rapport signal à bruit, le bruit étant principalement constitué par la lumière du jour ou la lumière artificielle dans la pièce où est effectué le contrôle. On choisira de moduler l'intensité de la source à une fréquence très supérieure à la fréquence maximum du signal à détecter. Pour une fréquence maximum du signal de 20 kHz, on prendra par exemple une fréquence de modulation de 200 kHz.

On pourra toutefois s'affranchir de la quasi-totalité de ces bruits en installant le dispositif selon l'invention dans une boîte noire.

D'autre part, tout système de dédoublement d'image autre que le prisme de Wollaston P1 peut convenir du moment qu'il dédouble la totalité du faisceau incident sans introduire de différence de marche entre les deux faisceaux formés. On pourra par exemple utiliser un prisme de Rochon. Un miroir semi-transparent peut également être utilisé, mais il faut s'arranger pour que les chemins optiques soient identiques de façon à pouvoir effectivement conjuguer correctement la source 1 avec les détecteurs D1 et D2.

Selon une variante non illustrée, on peut placer les détecteurs juste derrière la fibre au niveau du plan 4, sur les images nettes de la fente.

On pourra évidemment appliquer le procédé selon l'invention à toutes sortes de fils, sans sortir du cadre de l'invention. Par exemple, on peut détecter des irrégularités de diamètre sur des gaines de plastique extrudées autour de fils de cuivre, sur des fils de nylon, et plus généralement sur tous les fils utilisés en câblerie.

## Revendications

1. Dispositif de détection des irrégularités du diamètre d'un fil comprenant une source lumineuse (1) de petites dimensions placée au foyer d'un objectif (L0) centré sur un axe optique (X) orthogonal audit fil (5), une fente (3) de direction orthogonale audit axe optique (X) et diaphragmant ledit objectif (L0), un premier système optique (L1) centré sur ledit axe optique (X), suivi d'un système optique de dédoublement du faisceau incident (A) placé avant ledit fil (5), et des moyens de détection comprenant deux détecteurs recevant chacun un faisceau intercepté par ledit fil (5), caractérisé en ce que :
- ladite fente (3) a une direction orthogonale audit fil (5),
- ledit système optique de dédoublement (P1, L2) est destiné à former, en combinaison avec ledit premier système optique (L1), deux images nettes (3', 3'') de ladite fente (3) dans un plan (4) orthogonal audit axe optique (X) et où défile ledit fil (5),
- lesdits détecteurs (D1, D2) sont destinés à détecter les deux faisceaux (B, B'; C, C') interceptés par ledit fil dans la direction de l'axe optique (X), fournissent chacun un signal intermédiaire, et sont montés en opposition de manière à délivrer un signal final fonction de la différence entre l'un et l'autre desdits signaux intermédiaires.

2. Dispositif selon la revendication 1, caractérisé en ce que lesdits détecteurs sont situés respectivement sur deux images nettes et séparées (1', 1'') de ladite source (1).

3. Dispositif selon l'une des revendications 1 et 2, caractérisé en ce que ladite source (1) sera choisie monochromatique.

4. Dispositif selon l'une des revendications 1 à 3, caractérisé en ce que ladite source (1) est une diode électro-luminescente dont la largeur spectrale est inférieure à 100 nm.

5. Dispositif selon l'une des revendications 1 à 4, caractérisé en ce que ladite source (1) est modulée en amplitude à une fréquence supérieure à la fréquence maximum du signal à détecter.

6. Dispositif selon l'une des revendications 1 à 5, caractérisé en ce que ledit système optique de dédoublement (P1, L2) dédouble la totalité dudit faisceau incident (A) sans introduire de différence de marche entre les deux faisceaux (B, B') obtenus.

7. Dispositif selon l'une des revendications 1 à 6, caractérisé en ce que ledit système optique de dédoublement (P1, L2) est choisi parmi un prisme de Wollaston et un prisme de Rochon, qui dédoublent ledit faisceau incident (A) par séparation de polarisations.

8. Dispositif selon l'une des revendications 1 à 7, caractérisé en ce, que ledit système optique de dédoublement (P1, L2) agissant par séparation de polarisations du faisceau (A) émis par ladite source (1), on dispose sur le trajet de ce faisceau (A), entre ladite source (1) et ledit système optique de dédoublement (P1, L2), un polariseur dont l'orientation de l'axe de polarisation permet d'équilibrer l'intensité lumineuse desdites deux images (1', 1'') de ladite source.

9. Dispositif selon l'une des revendications 1 à 8, caractérisé en ce que les images nettes (3', 3'') de ladite fente (3) ont pour hauteur (h) la longueur minimale d'un défaut (8) à détecter.

10. Dispositif selon l'une des revendications 1 à 9, caractérisé en ce que la longueur (L) des images nettes (3', 3'') de ladite fente (3) est choisie supérieure à deux fois l'amplitude des déplacements latéraux dudit fil (5) dans le plan (4) orthogonal à l'axe optique (X).

11. Dispositif selon l'une des revendications 1 à 10, caractérisé en ce que la valeur de l'écartement (e) entre les deux images nettes (3', 3'') de ladite fente (3) est comprise entre une fois et dix fois la valeur de ladite hauteur (h) desdites images nettes (3', 3'') de ladite fente (3).

12. Dispositif selon l'une des revendications 1 à 11, caractérisé en ce que la longueur (L) de ladite fente (3) est égale à 2 mm.

13. Dispositif selon l'une des revendications 1, et 3 à 12, caractérisé en ce que lesdits détecteurs (D1, D2) sont situés respectivement sur deux images nettes et séparées de ladite fente (3).

14. Dispositif selon l'une des revendications 1 à 12, caractérisé en ce que, pour séparer lesdites images nettes (1', 1'') de ladite source (1), on dispose avant lesdits détecteurs (D1, D2) un prisme déviateur (P2) permettant d'éviter le recouvrement desdites images de ladite source (1) et de diriger lesdites images de ladite source (1) respectivement sur ledit détecteur correspondant.

15. Dispositif selon l'une des revendications 1 à 14, caractérisé en ce que ladite fente (3) est placée au foyer image dudit objectif (L0).

## Claims

1. Apparatus for detecting irregularities in the diameter of a filament, said apparatus comprising a small light source (1) placed at the focus of an objective lens system (L0) centered on an optical axis (X) that is orthogonal to said filament (5), a slot (3) which is orthogonal in direction to said optical axis (X) and which constitutes a diaphragm for said objective lens system (L0), a first optical system (L1) centered on said optical axis (X), followed, before said filament (5), by an optical beam-splitting system for splitting the incident beam (A), and detection means comprising two detectors, with each detector receiving a beam intercepted by said filament (5), said apparatus being characterized in that:
said slot (3) extends orthogonally to said filament (5);
said beam-splitting system (P1, L2) is designed in combination with said first optical system (L1) to form two sharp images (3', 3'') of said slot (3) in a plane (4) orthogonal to said optical axis (X) and where said filament (5) runs; and
said detectors (D1, D2) are designed to detect both beams (B, B'; C, C') intercepted by said filament in the direction of the optical axis (X), each detector supplying an intermediate signal, and the two detectors being oppositely connected so as to supply a final signal which is a function of the difference between the two intermediate signals.

2. Apparatus according to claim 1, characterized in that said detectors are situated on two respective separate sharp images (1', 1'') of said source (1).

3. Apparatus according to claim 1 or 2, characterized in that said source (1) is chosen to be monochromatic.

4. Apparatus according to any one of claims 1 to 3, characterized in that said source (1) is a light-emitting diode whose spectrum width is less than 100 nm.

5. Apparatus according to any one of claims 1 to 4, characterized in that said source (1) is amplitude modulated at a frequency higher than the maximum frequency of the signal to be detected.

6. Apparatus according to any one of claims 1 to 5, characterized in that said optical splitting system (P1, L2) splits the whole of said incident beam (A) without causing a path-length difference between the two resulting beams (B, B').

7. Apparatus according to any one of claims 1 to 6, characterized in that said optical splitting (P1, L2) system is chosen from a Wollaston prism and a Rochon prism, both of which split an incident beam (A) by separating polarizations.

8. Apparatus according to any one of claims 1 to 7, characterized in that, with said optical splitting system (P1, L2) acting by splitting polarizations of the beam (A) emitted by the source (1), a polarizer is disposed in the path of the beam (A) between the source (1) and the optical splitting system (P1, L2), and its axis of polarization is angularly positioned so as to enable the light intensities of said two images (1', 1'') of said source to be balanced.

9. Apparatus according to any one of claims 1 to 8, characterized in that the height (h) of the sharp images (3', 3'') of said slot (3) is equal to the minimum length of a fault (8) to be detected.

10. Apparatus according to any one of claims 1 to 9, characterized in that the length (L) of the sharp images (3', 3'') of said slot (3) is chosen to be greater than twice the amplitude of the lateral displacement of said filament (5) in the plane (4) orthogonal to the optical axis (X).

11. Apparatus according to any one of claims 1 to 10, characterized in that the value of the gap (e) between the two sharp images (3', 3'') of said slot (3) lies in the range once to ten times the value of said height (h) of said sharp images (3', 3'') of said slot (3).

12. Apparatus according to any one of claims 1 to 11, characterized in that the length (L) of said slot (3) is equal to 2 mm.

13. Apparatus according to any one of claims 1, and 3 to 12, characterized in that said detectors (D1, D2) are situated on two respective separate sharp images of said slot (3).

14. Apparatus according to any one of claims 1 to 12, characterized in that, in order to separate said sharp images (1', 1'') of said source (1), a deflecting prism is disposed before said detectors (D1, D2), which prism (P2) prevents said images of said source (1) from overlapping, and enables said images of said source (1) to be respectively directed to the corresponding detectors.

15. Apparatus according to any one of claims 1 to 14, characterized in that said slot (3) is placed at the image focus of said objective lens system (L0).

## Patentansprüche

1. Vorrichtung zur Erfassung von Durchmesserunregelmäßigkeiten eines Fadens, die eine Lichtquelle (1) kleiner Abmessungen im Brennpunkt eines Objektivs (L0), das auf eine optische Achse (X) senkrecht zum Faden (5) zentriert ist, einen Schlitz (3) mit einer optischen Achse (X) senkrechten Richtung, der das vom Objektiv (L0) kommende Licht abblendet, ein erstes auf die optische Achse (X) zentriertes optisches System (L1), gefolgt von einem optischen System zur Verdopplung des einfallenden Strahls (A), das vor dem Faden (5) angeordnet ist, und Erfassungsmittel aufweist, die zwei Detektoren enthalten, welche je einen der Strahlen empfangen, die vom Faden (5) durchquert wurden, dadurch gekennzeichnet, daß
- der Schlitz (3) eine zum Faden (5) senkrechte Richtung hat,
- das optische Verdopplungssystem (P1, P2) in Kombination mit dem ersten optischen System (L1) zwei klare Bilder (3', 3'') des Schlitzes (3) in einer Ebene (4) senkrecht zur optischen Achse (X) bildet, in der der Faden (5) verläuft,
- die Detektoren (D1, D2) die beiden vom Faden in Richtung der optischen Achse (X) durchquerten Strahlen (B, B'; C, C') erfassen, je ein Zwischensignal liefern und entgegengesetzt geschaltet sind, um ein Endsignal in Abhängigkeit vom Unterschied zwischen den Zwischensignalen zu liefern.

2. Vorrichtung nach Anspruch 1, dadurch gekennzeichnet, daß die Detektoren sich je auf einem von zwei klaren und getrennten Bildern (1', 1'') der Quelle (1) befinden.

3. Vorrichtung nach einem der Ansprüche 1 und 2, dadurch gekennzeichnet, daß die Quelle (1) monochromatisch ist.

4. Vorrichtung nach einem der Ansprüche 1 bis 3, dadurch gekennzeichnet, daß die Quelle (1) eine Elektrolumineszenzdiode ist, deren spektrale Bandbreite unter 100 nm liegt.

5. Vorrichtung nach einem der Ansprüche 1 bis 4, dadurch gekennzeichnet, daß die Quelle (1) mit einer Frequenz oberhalb der maximalen Frequenz des zu erfassenden Signals amplitudenmoduliert ist.

6. Vorrichtung nach einem der Ansprüche 1 bis 5, dadurch gekennzeichnet, daß das optische Verdoppelungssystem (P1, L2) die Gesamtheit des einfallenden Strahls (A) verdoppelt, ohne einen Weglängenunterschied zwischen den beiden erhaltenen Strahlen (B, B') einzuführen.

7. Vorrichtung nach einem der Ansprüche 1 bis 6, dadurch gekennzeichnet, daß das optische Verdoppelungssystem (P1, L2) unter einem Wollaston-Prisma und einem Rochon-Prisma ausgewählt wird, die den einfallenden Strahl (A) durch Trennung der Polarisationen verdoppeln.

8. Vorrichtung nach einem der Ansprüche 1 bis 7, dadurch gekennzeichnet, daß, wenn das optischen Verdopplungssystem durch Trennung von Polarisationen des von der Quelle (1) gelieferten Strahls (A) wirkt, man im Verlauf des Lichtstrahls (A) zwischen der Quelle (1) und dem optischen Verdopplungssystem (P1, L2) einen Polarisator anordnet, dessen Ausrichtung der Polarisationsachse es ermöglicht, die Lichtstärke der beiden Bilder (1', 1'') der Quelle einander anzugleichen.

9. Vorrichtung nach einem der Ansprüche 1 bis 8, dadurch gekennzeichnet, daß die Höhe (h) der klaren Bilder (3', 3'') des Schlitzes (3) der minimalen Länge eines zu erfassenden Fehlers (8) entspricht.

10. Vorrichtung nach einem der Ansprüche 1 bis 9, dadurch gekennzeichnet, daß die Länge (L) der klaren Bilder (3', 3'') des Schlitzes (3) größer als die doppelte Amplitude der seitlichen Verschiebungen des Fadens (5) in der Ebene (4) senkrecht zur optischen Achse (X) ist.

11. Vorrichtung nach einem der Ansprüche 1 bis 10, dadurch gekennzeichnet, daß der Abstand (e) zwischen den beiden klaren Bildern (3', 3'') des Schlitzes (3) zwischen einmal und zehnmal der Höhe (h) dieser klaren Bilder (3', 3'') des Schlitzes (3) entspricht.

12. Vorrichtung nach einem der Ansprüche 1 bis 11, dadurch gekennzeichnet, daß die Länge (L) des Schlitzes (3) 2 mm beträgt.

13. Vorrichtung nach einem der Ansprüche 1 und 3 bis 12, dadurch gekennzeichnet, daß die Detektoren (D1, D2) je in Höhe eines von zwei klaren und getrennten Bildern des Schlitzes (3 angeordnet sind.

14. Vorrichtung nach einem der Ansprüche 1 bis 12, dadurch gekennzeichnet, daß man zur Trennung der klaren Bilder (1', 1'') der Quelle (1) vor den Detektoren (D1, D2) ein Ablenkprisma (P2) anordnet, das es erlaubt, die Überdeckung der beiden Bilder der Quelle (1) zu verhindern und dieser Bilder der Quelle (1) je auf den entsprechenden Detektor zu lenken.

15. Vorrichtung nach einem der Ansprüche 1 bis 14, dadurch gekennzeichnet, daß der Schlitz (3) im Bildbrennpunkt (L0) des Objektivs (L0) anordnet ist.
